# EUROPEAN PATENT SPECIFICATION

(11) **EP 1 043 555 B1**
(45) Date of publication and mention of the grant of the patent: **05.11.2003**
(21) Application number: 00106599.4
(22) Date of filing: 28.03.2000
(51) Int. Cl.: F25D 31/00, F25D 25/04

(54) **Freezing and conveyor apparatus for nutrients**
Gefrier- und Fördergerät für Nährstoffe
Appareil de congélation et de transport pour des substances nutritives

(30) Priority: 06.04.1999 NO 991623
(43) Date of publication of application: 11.10.2000
(73) Proprietor: Stöhle, Arve, 6055 Godöy (NO)
(72) Inventor: Stöhle, Arve, 6055 Godöy (NO)
(74) Representative: Lundquist, Lars-Olof

(56) References cited:
- DE-A- 1 501 266
- FR-A- 1 518 087
- US-A- 2 631 440
- US-A- 4 342 205

## Description

The present invention relates to a freezing and conveyor apparatus adapted for automated depletion of frozen blocks from a vertical plate freezer, the plate freezer having a number of freezing plates arranged vertically adjacent each other and with a predetermined space between the freezing plates, which in turn are arranged in a frame structure that supports the respective freezing plates.

The invention also relates to a method for freezing of nutrients in a vertical plate freezer having freezing plates arranged vertically adjacent each other and depletion of nutrients in frozen block form from the plate freezer, comprising the steps of inserting the nutrients between the freezing plates in the plate freezer, freezing them and thawing the surface of the blocks for loosening them from the freezing plates.

A common way of freezing fish and shrimps is to use horizontal or vertical plate freezers. When it comes to horizontal freezers, several types of completely automated systems are existing, but something equivalent is not available in the same way when it comes to vertical freezers.

At present, automated depleting system for vertical freezers is not in use for else than land based facility and then primarily in the production of fish waste. Vertical freezers are used in all sorts of fishing vessels and land-based facility; the number of freezers can vary from a single one and up to 40-50 units.

On board in a boat, vertical freezers are preferably located in rows long ship/ cross ship so that common conveyors can be used for as many freezers as possible. This applies to both feeding and depleting conveyors.

During filling of the freezers, an operator is classifying the fish in respect of kind and size and then the fish is arranged between the vertical freezing plates until the space is filled up. The spaces can vary both in number and width. When the freezer is filled up, the vertical freezing plates are compressed 5-15 mm per space in order to somewhat compact the content before a refrigerant is supplied to the freezing plates and flows therethrough. Thus the freezing is commenced, a so-called contact freezing.

When the fish blocks are completely frozen, i.e. after approximately 3 hours depending on the kind and size of the fish, hot gasses are circulated through the freezing plates so that surface thawing occurs and the fish blocks separate from the freezing plates. The freezing plates are then moved apart such that the blocks are loosened completely from the plates and are resting on the lower end or bottom surface thereof only.

The bottom plates of the freezer are then elevated by means of hydraulic cylinders and forces the fish blocks upwards out of the freezer. When the blocks are forced up into upper position, the blocks are one by one pulled and lifted out of the freezer and thrown onto conveyor belts and then transported to a location where packing takes place. The freezer is subsequently ready for refilling and freezing.

There is a tendency within the fish industries that the degree of automation increases. This is amplified in that the fish industries have a recruiting problem. Thus the industry is urged to be innovative and then in particular by a better organisation of the work site by removing the heaviest and most severe working operations, to which an automation of vertical freezers will conduce.

By the now proposed apparatus, the automation shall happen gently and all movements of the blocks are to proceed in a controlled and safe manner. This because uncontrolled movements of the blocks could endanger the operator, the apparatus and the product proper.

The apparatus need to be simple and sturdy designed having a minimum of sensors and control systems. The refrigeratory technical function is to be based on known technology. The area demand of the apparatus should not be larger, and preferably less than what attended systems needs today.

The freezing capacity of the apparatus is to be equivalent or better than present equipment. The apparatus is to be manufactured of stainless materials, which is preferred over galvanised equipment often manufactured at present.

According to the present invention, a freezing and conveyor apparatus of the introductorily described nature is provided, which is characterized by a device for automated depletion including a lower conveyor for depletion of the frozen blocks, an above located conveyor having elements being displaceable and form the bottom of the plate freezer during filling of nutrients and freezing, which during the depletion process is driven in opposite direction of the lower conveyor, and means for providing a predetermined distance between the frame structure and the conveyors such that the frame structure and the freezing plates are separated from the conveyors before the depletion and driving of the conveyors are initiated.

In a first alternative, it is the frame structure that is elevateable in respect of the conveyors. Thus the blocks are left stand still for so to elevate the plate freezer.

The plate freezer inherently has low weight thus facilitating a slender structure and less effect and output of the lifting gear is required. This is per se the base idea for the invention, namely to avoid manual lifting of the frozen blocks.

As a second alternative, however, it is definitely possible to enable the conveyors to be lowered in respect of the frame structure. Neither this require heavy lifting gear since a lowering of the frozen blocks are in question only and no elevation.

Preferably are the freezing plates moveable in the longitudinal direction of the frame by means of a linear motor, such like a hydraulic cylinder, for compacting of the nutrient substance that is located between the freezing plates.

Preferably are the freezing plates linked together, but with a degree of freedom for mutual limited motion between the plates, and are in particular designed for cease of the compacting operation when the freezing plates are to be pulled a limited distance apart.

The moveable bottom of the plate freezer can be formed of a number of narrow plates having a coating of teflon on that side facing the block, and having vertical end plates that defines the width of the block.

Further, it will be possible to arrange two or more apparatus following each other in the longitudinal direction thereof, wherein the next downstream conveyor is used for further transportation of blocks from the preceding apparatus in that the conveyors are arranged adjacent each other in series.

According to the present invention also a method of the introductorily described kind is provided, which is characterized in that the depletion of the frozen nutrient blocks comprises the steps of: firstly providing a distance between the plate freezer and two underneath located conveyor means such that the freezing plates and the conveyors are separated, the first conveyor forming a displaceable bottom of the plate freezer during the filling of nutrients and freezing and on which the lower end surface of the blocks are still resting after that said distance is provided; driving the second conveyor, which is located underneath the displaceable bottom, in opposite direction of the displaceable bottom, the speed of the displaceable bottom and the lower conveyor being timed according to a predetermined time schedule, and dropping down the blocks from the first conveyor onto the second conveyor and transporting the blocks thereon.

One alternative is that the lower conveyor is running continuously, while the displaceable bottom is incrementally displaced, preferably approximately one block thickness per increment.

The preferred embodiment of the invention is given in the appended drawings :
Fig. 1 shows schematically the freezing and conveyor apparatus according to the invention in a depleting situation,
Fig. 2 shows schematically the conveyor part proper of the apparatus according to the invention,
Fig. 3 shows schematically the freezing and conveyor apparatus according to the invention in a freezing situation,
Fig. 4 shows schematically an end view of the apparatus according to the invention, and
Fig. 5 shows schematically two apparatus that are placed adjacent each other for establishing a common conveyor to the packaging and storing facility.

With the apparatus according to the invention, this concept will be able to handle both complete and halves of nutrient blocks. Typical dimensions are 1070 x 530 x 100 mm, possibly 2 x 530 x 530 x 100 mm. Typical weight will be approximately 45 kilo per block. Alternatively can blocks having different thickness be produced, for example 75/50 mm, and these will be handled in the same way. The user himself will be able to supply the actual block dimensions, but some extent of standardisation is already present.

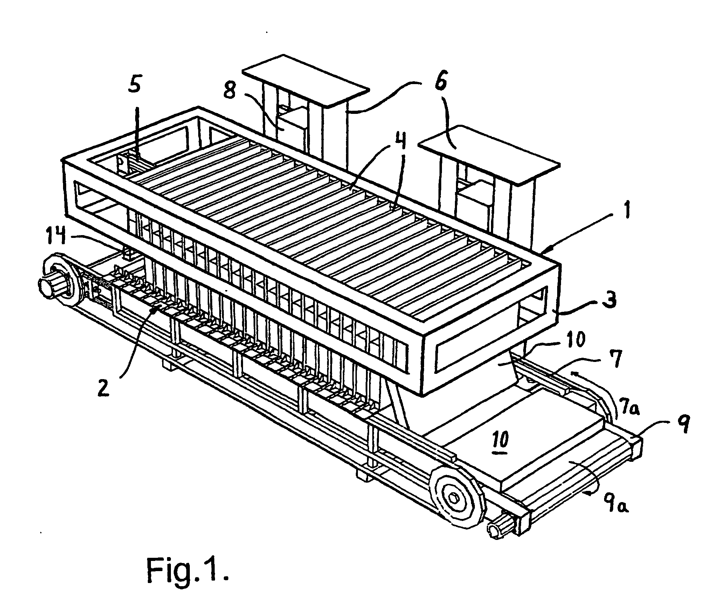

Fig.1 shows the complete freezing and conveyor apparatus according to the invention. A frame structure 3 supports a number of freezing plates 4 that are arranged vertically, thus the term vertical plate freezer 1 that is descriptive for the entire frame structure including all the freezing plates 4. The freezing plates 4 are linked together, but with a degree of freedom for mutual limited motion between the plates 4. The freezing plates 4 form the large vertical side walls of the freezing space and may in the lateral end thereof be designed in an angle in order to form the vertical narrower side walls, or end walls. Alternatively may the end walls be individual plates that are stabbed down between the large sidewalls at each lateral end. Before compacting, the end walls need in the initial position have sufficient clearance to take up the movement of 5-15 mm.

After that the nutrients are placed in between the freezing plates 4, a working cylinder 5 is activated, and the cylinder is forced against the end plate and the force is passed on and transferred to the next plate and so on. Thus an adapted compacting of the nutrient substance is achieved before the freezing commences.

A belt conveyor 9 is placed underneath the frame structure 3. The belt conveyor 9 transports the frozen nutrient blocks 10 further on to another location for packaging and storing. The arrow 9a shows the direction of motion of the conveyor 9 during normal operation. Another conveyor 7, hereafter called the upper conveyor 7, is lying above the belt conveyor 9. The upper conveyor 7 has a number of elements 2a that form an independent and displaceable bottom 2 of the plate freezer 1. The arrow 7a shows the direction of motion of the upper conveyor 7 during normal operation, note however that this one is opposite of the direction of motion of the belt conveyor 9.

At the side of the belt conveyor 9 and the frame structure 3, two lifting columns 6 are located. The lifting columns 6 are fixed to the ground, alternatively to the conveyors. Each lifting column 6 has a movable trolley 8 that is fixed to the frame structure 3. The frame structure 3 is in the shown embodiment cantilevered from the trolleys 8 and the frame structure 3 can be elevated or lowered via the trolleys 8 in respect of the conveyors 7,9.

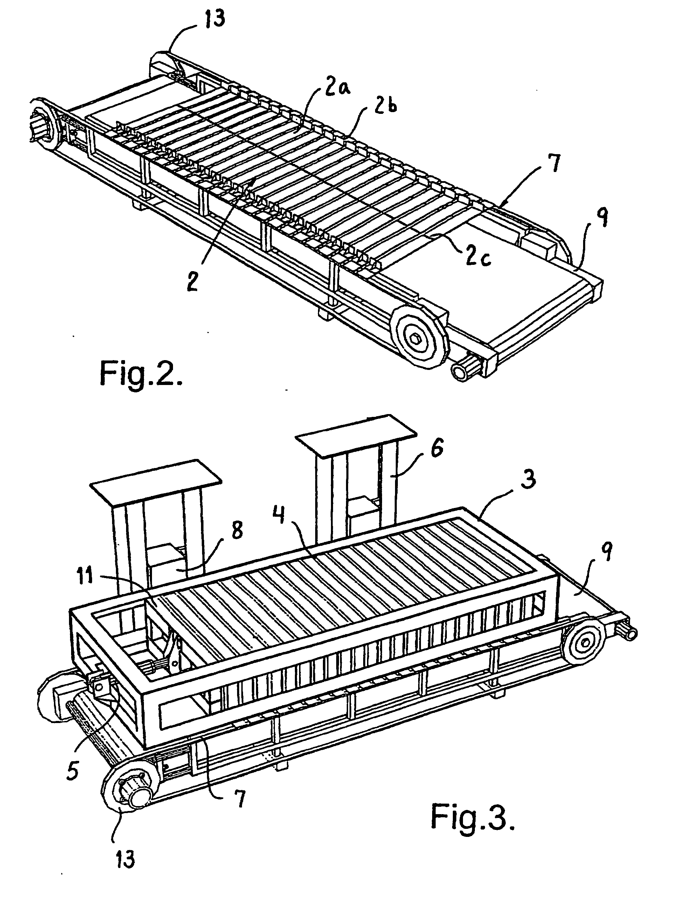

Now it is referred to fig.2 that shows the belt conveyor 9 and the upper conveyor 7 where the plate freezer 1 and the lifting columns 6 are not shown. Thus the displaceable bottom 2 is clearly revealed. It is to be understood that the displaceable bottom 2 is part of the upper conveyor 7 and is no part of the plate freezer 1, even if it will act as the bottom of the plate freezer 1 during filling of nutrients and freezing.

As it appears from the figure, the displaceable bottom 2 consists of a number of narrow plates 2a that are placed in parallel and adjacent each other. A gap, which is made as small as possible, exists between the plates 2a and the gap provides an articulated effect which enables the bottom 2 to be driven around end wheels 13 and return underneath the belt conveyor 9.

In order to ensure that the blocks 10 are easily loosened from the plates 2a and that the blocks 10 can skid on the plates 2a, the plates 2a are preferably coated with teflon coating. In addition, vertical plates 2b that support the block 10 laterally during dropping thereof onto the belt conveyor 9 can be mounted. On the utmost plate 2a, a hinged plate (not shown in the figures) that is moveable between a horizontal position and an inclination downwards at about 45 degrees, can be mounted in the longitudinal direction of the plates 2a. This will provide a gentle lead-down of the blocks 10 onto the conveyor 9. Another feature is that a groove 2c can be provided laterally of the plates 2a, for example in the middle of plates 2a. This makes it possible to fixate dividing plates when it is to be produced smaller blocks 10, for example half blocks.

The belt conveyor 9 is of a sturdy construction in order to be able to withstand the forces that appear when the plate freezer 1 is depleted. The upper conveyor 7 is to contribute to a controlled loading of the blocks 10 down onto the belt conveyor 9. Both conveyors 7,9 can be driven by hydraulic motors, possibly by electricity if that is preferred. The both conveyors 7,9 have connected speed control for enabling adjustments of the mutual speeds thereof since this is of importance regarding synchronising of the conveyors 7,9. It is possible to drive both conveyors continuously, or the belt conveyor 9 continuously and the upper conveyor 7 incrementally or stepwise.

Fig.3 shows the freezing and conveyor apparatus from the opposite end of what is shown in fig. and with the apparatus in that position it takes during filling and freezing of nutrients. This implies that the plate freezer I is lowered in respect of the conveyors 7,9. The working cylinder 5 appears more clearly and is shown articulately fixed in one end thereof to the frame structure 3 and articulately fixed in the opposite end thereof to a press plate 11. The press plate 11 can by activation of the working cylinder 5 press against the closest freezing plate 4 that transmit the press force further to next freezing plate 4 and so on, in order to compact the nutrients that are lying in all the spaces between the respective freezing plates 4.

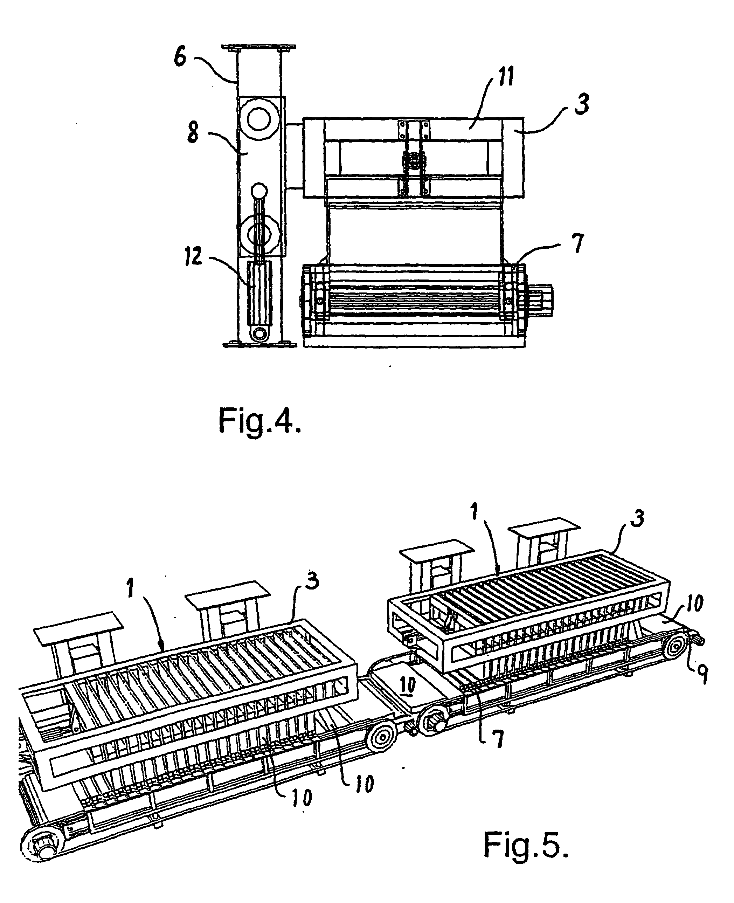

Fig.4 shows an end view of the apparatus from the same end as fig.3. It is shown how the frame structure 3 is cantilevered from the lifting columns 6, i.e. from the trolleys 8 that are able to roll up and down along the columns 6 by means of lifting cylinders 12 that are located inside each respective column 6. The trolleys 8 are provided with wheels that are running in guiding rails internal of the columns 6.

Fig.5 shows two apparatus that are located adjacent each other in the longitudinal direction thereof. Several apparatus can be placed following each other in a long row as desired. Thus they can form a common conveyor extended to the packing and storing facility. The frozen blocks 10 can be transferred from the one belt conveyor 9 to the next belt conveyor when the next apparatus otherwise is not in operation. In this way one is able to deplete one freezer at the time.

One filling operation of the spaces in the plate freezer 1 will now be described. Another conveyor is placed over or at the side of the plate freezer 1 and carries the product towards the operator that is responsible for the filling. The operator classifies the fish and fills the spaces so that the product is filled to the edge of the freezing plates 4. The plate freezer 1 is then in a filling position, i.e. that the freezing plates 4 are sealing downwards against the teflon coated lateral plates 2a on the upper conveyor 7. As mentioned, do the plates 2a then form the bottom 2 of the freezer. The end plates, also made of plastic, for the spaces are projecting down beyond the frame structure 3 in the same way as the freezing plates 4. In this way sealings are formed along the bottom of the freezer. In order that the freezing plates 4 and the side plates of plastic are not to be destroyed during the elevation/lowering sequence, it is the raised side guides on the lateral plates 2a that abut the frame 1 to 1,5 mm before the freezing plates 4 and the side plates hit the lateral plate 2a.

When all the spaces are filled with fish or shrimps, the freezing plates 4 are urged towards each other approx. 5 to 15 mm per space by means of the hydraulic cylinder 5. The way this is done is per se according to what is considered to be standard procedure for existing apparatus. When the freezing plates 4 are pressed together so that the distance is correct, the refrigerant is flowed through the freezing plates 4, and the freezing commences by so-called contact freezing. The freezer remains in this position until the freezing down operation is finished, empirical 3 to 4 hours depending inter alia on the kind and size of the fish.

A depleting operation of the apparatus will now be described. After terminated freezing time the depleting sequence is initiated by defrosting the freezing plates 4. This is performed by flowing hot gas through the freezing plates 4 so that thawing occurs between the blocks 10 and the freezing plates 4. Then the freezing plates 4 are moved apart by means of the hydraulic cylinder 5. When the freezing plates 4 are in the extreme outer position the blocks 10 will be free standing and rest on the lateral plates 2a on the upper conveyor 7. In order to secure that the blocks 10 remain on the conveyor when the freezing plates 4 are elevated, a counter acting means (not shown) can be mounted above each space and the counter acting means will act directly against the top of each block 10.

Next step is to elevate the entire frame structure 3 including the freezing plates 4 by means of the hydraulic lifting cylinders 12 that elevate each trolley 8 that the frame structure 3 is attached to.

The frame structure 3 including the freezing plates 4 are elevated so that the lower edge of the freezing plates 4 are lying approx. 50 mm below the top of the frozen blocks 10. By the fact of this overlap of about 50 mm, the blocks 10 will not drop uncontrolled down onto the underlying belt conveyor 9. The same function does the raised side edges 2b of the lateral plates 2a have.

When one are about to enter the frozen blocks 10 down onto the belt conveyor 9, this is initiated by the first start of the belt conveyor 9 in the direction of the arrow 9a. Next step is to start the upper conveyor 7 in the direction of the arrow 7a, i.e. opposite the direction of the belt conveyor 9. The frozen blocks 10 are urged against a rear stop 14, which results in that the blocks 10 one by one drops down from the lateral plates 2a and onto the underlying belt conveyor 9. The difference in speed between the two conveyors 7,9 will provide a gentle downloading of the blocks 10 onto the belt conveyor 9.

The upper conveyor 7 continues to drop one by one block 10 down onto the belt conveyor 9 until all the blocks 10 are transported out of the plate freezer 1 and further on to another location. After that the last block 10 is dropped down, the upper conveyor 7 will return to the initial position, i.e. that the lateral plates 2a once more form the bottom of the plate freezer 1. The frame structure 3 including the freezing plates 4 can now be lowered to the initial position and the plate freezer 1 is ready for refilling.

## Claims

1. A freezing and conveyor apparatus adapted for automated depletion of frozen blocks (10) from a vertical plate freezer (1), the plate freezer (1) having a number of freezing plates (4) arranged vertically adjacent each other and with a predetermined space between the freezing plates (4), which in turn are arranged in a frame structure (3) that supports the respective freezing plates (4), **characterized by** a device for automated depletion including a lower conveyor (9) for depletion of the frozen blocks (10), an above located conveyor (7) having elements (2a) being displaceable and form the bottom (2) of the plate freezer (1) during filling of nutrients and freezing, which during the depletion process is driven in opposite direction of the lower conveyor (9), and means for providing a predetermined distance between the frame structure (3) and the conveyors (7, 9) such that the frame structure and the freezing plates are separated from the conveyors before the depletion and driving of the conveyors (7, 9) are initiated.

2. A freezing and conveyor apparatus according to claim 1, **characterized in that** it is the frame structure (3) that is elevateable in respect of the conveyors (7, 9).

3. A freezing and conveyor apparatus according to claim 1, **characterized in that** it is the conveyors (7, 9) that are elevateable in respect of the frame structure (3).

4. A freezing and conveyor apparatus according to one of the claims 1-3, **characterized in that** the freezing plates (4) are movable in the longitudinal direction of the frame structure (3) by means of a linear motor, such as a hydraulic cylinder (5), for compacting of the substance that is present between the freezing plates (4).

5. A freezing and conveyor apparatus according to one of the claims 1-4, **characterized in that** the freezing plates (4) are linked together, but having a degree of freedom for mutual limited motion between the plates (4), in particular intended on cease of the compacting operation when the freezing plates (4) are to be pulled a limited distance apart.

6. A freezing and conveyor apparatus according to one of the claims 1-5, **characterized in that** the displaceable bottom (2) of the plate freezer (1) is formed of a number of narrow plates (2a) having a teflon coating on that side facing towards the block (10), and vertical end plates (2b) for side guidance of the blocks (10) during depletion.

7. A freezing and conveyor apparatus according to one of the claims 1-6, **characterized in that** a counter acting means (not shown) is arranged above the plate freezer (1) that acts directly against each block (10).

8. A freezing and conveyor apparatus according to one of the claims 1-7, **characterized in that** two or more apparatus are placed longitudinally after each other, in which the next downstream lower conveyor (9) is used to further transportation of blocks (10) from the preceding apparatus **in that** the conveyors (9) are placed adjacent each other in series.

9. A method for freezing of nutrients in a vertical plate freezer (1) having freezing plates (4) arranged vertically adjacent each other and depletion of nutrients in frozen block form from the plate freezer (1), comprising the steps of inserting the nutrients between the freezing plates (4) in the plate freezer (1), freezing them and thawing the surface of the blocks (10) for loosening them from the freezing plates (4), **characterized in that** the depletion of the frozen nutrient blocks (10) comprises the steps of: firstly providing a distance between the plate freezer (1) and two underneath located conveyor means (7, 9) such that the freezing plates (4) and the conveyors (7, 9) are separated, the first conveyor (7) forming a displaceable bottom (2) of the plate freezer (1) during the filling of nutrients and freezing and on which the lower end surface of the blocks (10) are still resting after that said distance is provided; driving the second conveyor (9), which is located underneath the displaceable bottom (2), in opposite direction of the displaceable bottom (2), the speed of the displaceable bottom (2) and the lower conveyor (9) being timed according to a predetermined time schedule, and dropping down the blocks (10) from the first conveyor (7) onto the second conveyor (9) and transporting the blocks (10) thereon.

10. Method according to claim 9, **characterized in that** the lower conveyor (9) is continuously running, while the displaceable bottom (2) is running incrementally, preferably at approximately one block thickness per increment.

## Patentansprüche

1. Gefrier- und Förderanlage, die für eine automatisierte Entleerung gefrorener Blöcke (10) aus einem Vertikal-Plattengefriergerät (1) angepasst ist, wobei das Plattengefriergerät (1) eine Anzahl Gefrierplatten (4) aufweist, die benachbart und zueinander in einem vorbestimmten Abstand zwischen den Gefrierplatten (4) angeordnet sind, die nacheinander in einer Rahmenstruktur (3) angeordnet sind, die die jeweiligen Gefrierplatten (4) trägt, **gekennzeichnet durch** ein Gerät zur automatisierten Entleerung mit einer unteren Fördervorrichtung (9) zur Entleerung der gefrorenen Blöcke (10), einer darüber angeordneten Fördervorrichtung (7) mit Elementen (2a), die verschiebbar sind und während einer Befüllung mit Nahrungsmitteln und einem Gefriervorgang den Boden (2) des Plattengefriergeräts (1) bilden, der während des Entleerungsvorgangs in zur unteren Fördervorrichtung (9) entgegengesetzten Richtung bewegt wird und mit Mitteln zur Bereitstellung eines vorbestimmten Abstands zwischen der Rahmenstruktur (3) und den Fördervorrichtungen (7, 9) derart, dass die Rahmenstruktur und die Gefrierplatten von den Förderanlagen vor dem Beginn der Entleerung und einer Inbetriebnahme der Fördervorrichtungen (7, 9) getrennt sind.

2. Gefrier- und Förderanlage nach Anspruch 1, **dadurch gekennzeichnet, dass** die Rahmenstruktur (3) in Bezug auf die Fördervorrichtungen (7, 9) anhebbar ist.

3. Gefrier- und Förderanlage nach Anspruch 1, **dadurch gekennzeichnet, dass** die Fördervorrichtungen (7, 9) in Bezug auf die Rahmenstruktur (3) anhebbar sind.

4. Gefrier- und Förderanlage nach einem der Ansprüche 1 bis 3, **dadurch gekennzeichnet, dass** die Gefrierplatten (4) mittels eines Linearantriebs, wie z.B. ein Hydraulikzylinder (5), in Längsrichtung der Rahmenstruktur (3) zur Komprimierung der zwischen den Gefrierplatten (4) befindlichen Substanz bewegbar sind.

5. Gefrier- und Förderanlage nach einem der Ansprüche 1 bis 4, **dadurch gekennzeichnet, dass** die Gefrierplatten (4) miteinander verbunden sind, jedoch mit einer beschränkten gegenseitigen Bewegungsfreiheit zwischen den Platten (4), insbesondere zur Beendigung des Komprimiervorgangs, wenn die Gefrierplatten (4) eine begrenzte Strecke auseinandergezogen werden sollen.

6. Gefrier- und Förderanlage nach einem der Ansprüche 1 bis 5, **dadurch gekennzeichnet, dass** der verschiebbare Boden (2) des Plattengefriergeräts (1) aus einer Anzahl schmaler Platten (2a), die auf der zu den Blöcken (10) gerichteten Seite mit einem Teflonüberzug versehen sind, und mit vertikalen Endplatten (2b) zur seitlichen Führung der Blöcke (10) während der Entleerung gebildet ist.

7. Gefrier- und Förderanlage nach einem der Ansprüche 1 bis 6, **dadurch gekennzeichnet, dass** oberhalb des Plattengefriergeräts (1) ein Mittel zur Gegenwirkung (nicht dargestellt) angeordnet ist, das unmittelbar gegen jeden Block (10) wirkt.

8. Gefrier- und Förderanlage nach einem der Ansprüche 1 bis 7, **dadurch gekennzeichnet, dass** zwei oder mehr Anlagen in Längsrichtung hintereinander angeordnet sind, wobei die nächste stromabwärts gelegene untere Fördervorrichtung (9) für einen weiteren Transport der Blöcke (10) von der vorausgehenden Anlage verwendet wird, wobei die Fördervorrichtungen (9) zueinander benachbart in Reihe angeordnet werden.

9. Verfahren zum Gefrieren von Nahrungsmitteln in einem Vertikal-Plattengefriergerät (1) mit vertikal zueinander benachbarten Gefrierplatten (4) und zum Entleeren von Lebensmitteln in Form gefrorener Blöcke aus dem Plattengefriergerät (1), das die Schritte umfasst, die Lebensmittel zwischen die Gefrierplatten (4) in dem Plattengefriergerät (1) einzufüllen, diese zu gefrieren und die Oberfläche der Blöcke (10) aufzutauen, um sie von den Gefrierplatten (4) zu lösen, **dadurch gekennzeichnet, dass** die Entleerung der gefrorenen Nahrungsmittelblöcke (10) folgende Schritte umfasst:
zunächst Bereitstellen eines Abstandes zwischen dem Plattengefriergerät (1) und zwei unterhalb angeordneter Fördervorrichtungen (7, 9), so dass die Gefrierplatten (4) und die Fördervorrichtungen (7, 9) getrennt sind, wobei die erste Fördervorrichtung (7) während des Einfüllens und des Gefrierens von Lebensmitteln einen verschiebbaren Boden (2) des Plattengefriergeräts (1) bildet, auf dem die unteren Enden der Blöcke (10) noch gestützt sind, nachdem der Abstand bereitgestellt ist; Antreiben der zweiten Fördervorrichtung (9), die unterhalb des verschiebbaren Bodens (2) angeordnet ist, in entgegengesetzter Richtung zu dem verschiebbaren Boden (2), wobei die Geschwindigkeit des verschiebbaren Bodens (2) und der unteren Fördervorrichtung (9) gemäß eines vorher festgelegten Zeitablaufs bestimmt sind sowie Fallenlassen der Blöcke (10) von der ersten Fördervorrichtung (7) auf die zweite Fördervorrichtung (9) und Transport der Blöcke (10) darauf.

10. Verfahren nach Anspruch 9, **dadurch gekennzeichnet, dass** die untere Fördervorrichtung (9) kontinuierlich betrieben wird, während der verschiebbare Boden (2) inkremental betrieben wird, vorzugsweise etwa eine Blockdicke pro Inkrement.

## Revendications

1. Appareil de congélation et de transport conçu pour sortir de manière automatisée des blocs congelés (10) d'un congélateur (1) à plaques verticales, le congélateur (1) à plaques ayant un nombre de plaques de congélation (4) mutuellement adjacentes disposées verticalement et avec un espace prédéterminé entre les plaques de congélation (4), qui sont elles-mêmes disposées dans une structure de bâti (3) qui supporte les plaques de congélation respectives (4), **caractérisé par** un dispositif de vidage automatisé comprenant un convoyeur inférieur (9) pour sortir les blocs congelés (10), un convoyeur supérieur (7) à éléments mobiles (2a) formant le fond (2) du congélateur (1) à plaques pendant l'introduction d'aliments et la congélation, lequel convoyeur supérieur étant entraîné dans une direction opposée à celle du convoyeur inférieur (9) pendant le vidage, et un moyen pour établir une distance prédéterminée entre la structure de bâti (3) et les convoyeurs (7, 9) de façon que la structure de bâti et les plaques de congélation soient séparées des convoyeurs avant le début du vidage et de l'entraînement des convoyeurs (7, 9).

2. Appareil de congélation et de transport selon la revendication 1, **caractérisé en ce que** la structure de bâti (3) peut être élevée par rapport aux convoyeurs (7, 9).

3. Appareil de congélation et de transport selon la revendication 1, **caractérisé en ce que** les convoyeurs (7, 9) peuvent être élevés par rapport à la structure de bâti (3).

4. Appareil de congélation et de transport selon l'une quelconque des revendications 1 à 3, **caractérisé en ce que** les plaques de congélation (4) sont mobiles dans la direction longitudinale de la structure de bâti (3) sous l'action d'un moyen d'entraînement linéaire tel qu'un vérin hydraulique (5) pour tasser la substance présente entre les plaques de congélation (4).

5. Appareil de congélation et de transport selon l'une quelconque des revendications 1 à 4, **caractérisé en ce que** les plaques de congélation (4) sont reliées les unes aux autres, mais ont un degré de liberté pour un mouvement mutuel limité entre les plaques (4), en particulier prévu au terme de l'opération de tassement au moment où les plaques de congélation (4) doivent subir une traction pour s'écarter les unes des autres sur une distance limitée.

6. Appareil de congélation et de transport selon l'une quelconque des revendications 1 à 5, **caractérisé en ce que** le fond mobile (2) du congélateur (1) à plaques est formé d'un certain nombre de plaques étroites (2a) ayant un revêtement en Téflon sur la face orientée vers le bloc (10), et des plaques verticales d'extrémités (2b) pour le guidage latéral des blocs (10) pendant le vidage.

7. Appareil de congélation et de transport selon l'une quelconque des revendications 1 à 6, **caractérisé en ce qu'**un moyen antagoniste (non représenté) est disposé au-dessus du congélateur (1) à plaques pour agir directement contre chaque bloc (10).

8. Appareil de congélation et de transport selon l'une quelconque des revendications 1 à 7, **caractérisé en ce que** sont placés longitudinalement les uns après les autres deux appareils ou plus dans lesquels le convoyeur inférieur (9) le plus proche vers l'aval sert à continuer à transporter des blocs (10) depuis l'appareil précédent, dans la mesure où les convoyeurs (9) sont placés en série de manière adjacente les uns aux autres.

9. Procédé pour congeler des aliments dans un congélateur (1) à plaques verticales ayant des plaques de congélation (4) disposées verticalement de manière mutuellement adjacente et pour sortir du congélateur (1) à plaques des aliments sous la forme de blocs congelés, comprenant les étapes consistant à introduire les aliments entre les plaques de congélation (4) dans le congélateur (1) à plaques, congeler ceux-ci et dégeler la surface des blocs (10) pour les détacher des plaques de congélation (4), **caractérisé en ce que** la sortie des blocs d'aliments congelés (10) comprend les étapes consistant à : tout d'abord établir une distance entre le congélateur (1) à plaques et deux convoyeurs (7, 9) situés sous celui-ci de façon que les plaques de congélation (4) et les convoyeurs (7, 9) soient séparés, le premier convoyeur (7) formant pendant l'introduction des aliments et la congélation un fond mobile (2) du congélateur (1) à plaques sur lequel les surfaces d'extrémités inférieures des blocs (10) continuent à reposer après l'établissement de cette distance ; entraîner le deuxième convoyeur (9), qui se trouve sous le fond mobile (2), dans une direction opposée au fond mobile (2), les vitesses du fond mobile (2) et du convoyeur inférieur (9) étant synchronisées suivant un programme prédéterminé, et faire tomber les blocs (10) depuis le premier convoyeur (7) sur le deuxième convoyeur (9) et transporter les blocs (10) sur celui-ci.

10. Procédé selon la revendication 9, **caractérisé en ce que** le convoyeur inférieur (9) fonctionne en continu tandis que le fond mobile (2) fonctionne pas à pas, de préférence approximativement par pas de l'épaisseur d'un bloc.
